# EUROPEAN PATENT APPLICATION

(11) **EP 4 379 032 A1**
(43) Date of publication of application: **05.06.2024**
(21) Application number: 22849255.9
(22) Date of filing: 13.07.2022
(51) Int. Cl.: C12G 3/06

(54) **ALCOHOLIC BEVERAGE**

(30) Priority: 30.07.2021 JP 2021124988
(71) Applicant: Suntory Holdings Limited, Osaka 530-8203 (JP)
(72) Inventor: OKURA, Ryuki, Kawasaki-shi, Kanagawa 211-0067 (JP); YOSHIHIRO, Akira, Kawasaki-shi, Kanagawa 211-0067 (JP)
(74) Representative: Vossius & Partner Patentanwälte Rechtsanwälte mbB
(86) International application number: PCT/JP2022/027521
(87) International publication number: WO 2023/008191

(57) **Abstract**

An object of the present invention is to provide an alcoholic beverage having a reduced sensation of irritation of alcohol. The weight ratio (A/B) of (A) cis-3-hexen-1-ol to (B) α-terpineol in the beverage is adjusted to 35 or more and 30,000 or less, and the content of cis-3-hexen-1-ol is adjusted to 90,000 ppb or less.

## Description

### TECHNICAL FIELD

The present invention relates to an alcoholic beverage. More specifically, the present invention relates to an alcoholic beverage having a reduced sensation of irritation of alcohol, and a method of producing the same.

### BACKGROUND ART

In recent years, the amount of consumption of alcoholic drinks is declining particularly in the younger generation. The diversification of consumer tastes for alcoholic drinks and a large change in drinking styles are pointed out as the reasons. To correspond to such a change, alcoholic drinks manufacturers are intensively developing various new alcoholic beverage products. In developing such new products, various problems that are conventionally not recognized have appeared.

For example, in alcoholic beverages, a light flavor of alcohol is preferred, whereas a sensation of irritation of alcohol is pointed out as a disadvantage, in some cases. As the method of reducing such a sensation of irritation of alcohol, methods using a physical device or a flavor improver are conventionally known.

As the method using a physical device, specifically, methods such as a method of subjecting an alcoholic beverage to sonication treatment (Patent Literature 1), a method of bringing an alcoholic beverage into contact with a ceramic (Patent Literature 2), a method in which magnetic field lines are applied during alcoholic beverage production (Patent Literature 3), a method of stirring an alcoholic beverage with ultrasonic vibration (Patent Literature 4), and a method of bringing an alcoholic beverage into contact with a semiconductor material (Patent Literature 5) are known. However, these methods have disadvantages such that the improvement in the sensation of irritation of alcohol in the alcoholic beverage is insufficient, a large device is required, and the like.

As the method of masking the sensation of irritation of alcohol, a method of using an aliphatic ester as a masking agent (Patent Literature 6), a method of using star anise seed oil, anise oil, fennel oil, caraway oil, spearmint oil, dill oil, kuromoji oil, pennyroyal oil, lemon oil, camphor oil, orange peel oil, or fennel oil as the masking agent of the sensation of irritation of alcohol (Patent Literature 7), a method of adding sucralose (Patent Literature 8), a method of using a taste improver made of the fruit of paradicsompaprika as the masking agent of the sensation of irritation of alcohol (Patent Literature 9), a method of using a yeast extract as the masking agent of the sensation of irritation of alcohol (Patent Literature 10), and the like are known. However, these methods have disadvantages such that they can be only used in specific alcoholic beverages, and the taste and color of the masking agent itself easily affect the flavor and color tone of the alcoholic beverage.

### CITATION LIST

### PATENT LITERATURE

PTL 1: Japanese Patent Laid-Open No. 54-119098
PTL 2: Japanese Patent Laid-Open No. 63-12273
PTL 3: Japanese Patent Laid-Open No. 6-30758
PTL 4: Japanese Patent Laid-Open No. 11-9257
PTL 5: Japanese Patent Laid-Open No. 2000-224979
PTL 6: Japanese Patent Laid-Open No. 8-187277
PTL 7: Japanese Patent Laid-Open No. 8-188791
PTL 8: Japanese Patent Laid-Open No. 8-224075
PTL 9: Japanese Patent Laid-Open No. 10-313849
PTL 10: Japanese Patent Laid-Open No. 2002-253199

### SUMMARY OF INVENTION

### TECHNICAL PROBLEM

Due to growing interest in health, various alcoholic beverages are produced and made commercially available. However, the problem of the above-described sensation of irritation of alcohol is not necessarily sufficiently solved. In view of such a situation, an object of the present invention is to provide an alcoholic beverage having a reduced sensation of irritation of alcohol.

### SOLUTION TO PROBLEM

The present inventors have developed an alcoholic beverage that has an alleviated sensation of irritation of alcohol and can satisfy the demands of consumers. As a result, the present inventors have found that the sensation of irritation of alcohol in the alcoholic beverage is reduced by adjusting the volume ratio (A/B) of (A) cis-3-hexen-1-ol to (B) α-terpineol in the alcoholic beverage to 35 or more and 30,000 or less and adjusting the content of cis-3-hexen-1-ol in the beverage to 90,000 ppb or less, thereby completing the present invention.

That is, the present invention encompasses, but is not limited to, the inventions of the following aspects.
(1) An alcoholic beverage, wherein a volume ratio (A/B) of (A) cis-3-hexen-1-ol to (B) α-terpineol is 35 or more and 30,000 or less, and wherein a content of cis-3-hexen-1-ol is 90,000 ppb or less.
(2) The alcoholic beverage according to (1), wherein the content of cis-3-hexen-1-ol is 10 ppb or more and 50,000 ppb or less.
(3) The alcoholic beverage according to (1) or (2), wherein a content of α-terpineol is 0.1 ppb or more and 100 ppb or less.
(4) The alcoholic beverage according to any one of (1) to (3) including cis-3-hexen-1-ol and α-terpineol derived from a plant of the family Theaceae.
(5) The alcoholic beverage according to (4), wherein the plant of the family Theaceae is tea plant (Camellia sinensis).
(6) The alcoholic beverage according to any one of (1) to (3) including cis-3-hexen-1-ol and α-terpineol derived from green tea.
(7) The alcoholic beverage according to any one of (1) to (6), wherein
   an alcohol content is 10 v/v% or more;
   the content of cis-3-hexen-1-ol is 10 ppb or more and 50,000 ppb or less; and
   the content of α-terpineol is 0.1 ppb or more and 100 ppb or less.
(8) The alcoholic beverage according to any one of (1) to (6), wherein
   an alcohol content is 1.0 v/v% or more and less than 10 v/v%;
   the content of cis-3-hexen-1-ol is 10 ppb or more and 50,000 ppb or less; and the content of α-terpineol is 0.1 ppb or more and 100 ppb or less.
(9) The alcoholic beverage according to any one of (1) to (8), wherein the alcoholic beverage does not include carbon dioxide.
(10) A method of producing an alcoholic beverage, including:
   (i) a step of adjusting a volume ratio (A/B) of (A) cis-3-hexen-1-ol to (B) α-terpineol to 35 or more and 30,000 or less;
   (ii) a step of adjusting a content of cis-3-hexen-1-ol to 90,000 ppb or less; and
   (iii) a step of adjusting an alcohol content of the beverage to less than 80 v/v%.

### ADVANTAGEOUS EFFECTS OF INVENTION

The present invention can provide an easy-to-drink alcoholic beverage having a reduced sensation of irritation of alcohol. Such an alcoholic beverage has an excellent quality satisfying consumer tastes.

### DESCRIPTION OF EMBODIMENTS

### 1. Alcohol beverage

In one aspect, the present invention is an alcoholic beverage having a volume ratio (A/B) of (A) cis-3-hexen-1-ol to (B) α-terpineol of 35 or more and 30,000 or less and a content of cis-3-hexen-1-ol is 90,000 ppb or less.

The present invention relates to an alcoholic beverage. In an aspect, the present invention relates to a tea-based alcoholic beverage having a tea flavor in which an extraction liquid of green tea, oolong tea, or the like is blended. The alcohol used in the alcoholic beverage of the present invention is not particularly limited, and those usually used in alcoholic drinks, such as distilled spirits, fruit liquors, and sake (Japanese sake), can be used. For example, brewing alcohol, spirits (such as rum, vodka, and gin), whisky, brandy, and shochu may be each used singly or in combination. Among them, a continuous distilled alcohol obtained by distilling an alcohol-containing product with a continuous still is preferably used. Examples of such a continuous distilled alcohol may include brewing alcohol, material alcohol, continuous distilled shochu (so-called Korui shochu), and grain whisky.

In the present invention, the term alcohol refers to ethyl alcohol (ethanol), unless otherwise indicated. The alcohol content refers to the volume% (v/v%) in a beverage. In the alcoholic beverage of the present invention, the upper limit value of the alcohol content is not particularly limited as long as the volume ratio (A/B) of (A) cis-3-hexen-1-ol to (B) α-terpineol in the beverage is 35 or more and 30,000 or less, and is typically less than 80 v/v%. The lower limit value of the alcohol content in the alcoholic beverage of the present invention is also not particularly limited, and is typically 1.0 v/v% or more.

The alcoholic beverage of the present invention includes not only low-concentration alcoholic beverages that are presumed to be drunk as they are, but also high-concentration alcoholic beverages that are drunk by being diluted as necessary. The alcohol content of the low-concentration alcoholic beverage is not particularly limited as long as the volume ratio (A/B) of (A) cis-3-hexen-1-ol to (B) α-terpineol in the beverage is 35 or more and 30,000 or less, and typically, the upper limit value is 10 v/v% or less, 9.0 v/v% or less, 8.0 v/v% or less, 7.0 v/v% or less, 6.0 v/v% or less, or 5.0 v/v% or less, and the lower limit value is 1.0 v/v% or more, 2.0 v/v% or more, 3.0 v/v% or more, or 4.0 v/v% or more.

As described above, the alcoholic beverage of the present invention includes high-concentration alcoholic beverages that are drunk by being diluted as necessary. The alcohol content of the high-concentration alcoholic beverages is also not particularly limited as long as the volume ratio (A/B) of (A) cis-3-hexen-1-ol to (B) α-terpineol in the beverage is 35 or more and 30,000 or less, and typically, the upper limit value is less than 80 v/v%, 70 v/v% or less, 60 v/v% or less, 50 v/v% or less, 40 %v/v or less, 30 v/v% or less, or 20 v/v or less, and the lower limit value is 5.0 v/v% or more, 7.0 v/v% or more, 9.0 v/v% or more, 10 v/v% or more, 15 v/v% or more, or 20 v/v or more.

As the method of adjusting the alcohol content, any of known methods, such as the adjustment of the amount of the alcohol component to be added, may be used.

In the present specification, the alcohol content of the alcoholic beverage can be measured by any of known methods and can be measured by, for example, a vibration type densitometer. Specifically, the alcohol content of the alcoholic beverage can be determined by removing carbon dioxide from the alcoholic beverage by filtration or ultrasonication to prepare a sample, distilling the prepared sample by direct fire, and measuring and converting the density of the obtained distillate at 15°C using "Table 2 Conversion among Alcohol Content, Density (15°C) and specific gravity (15/15°C)" which is appended to the Official Analysis Method of the National Tax Agency (National Tax Agency Directive No. 6 in 2007, revised on June 22, 2007).

The alcoholic beverage of the present invention contains (A) cis-3-hexen-1-ol which is one of the unsaturated alcohols and also referred to as leaf alcohol. Cis-3-Hexen-1-ol is a colorless liquid at ambient temperature which is discovered as an aroma component of green tea and named. The upper limit value of the content of cis-3-hexen-1-ol in the alcoholic beverage of the present invention is 90,000 ppb or less, preferably 70,000 ppb or less, 50,000 ppb or less, 30,000 ppb or less, 10,000 ppb or less, 5,000 ppb or less, or 1,000 ppb or less. The lower limit value of the content of cis-3-hexen-1-ol in the alcoholic beverage of the present invention is not particularly limited, and is typically 10 ppb or more, 100 ppb or more, 200 ppb or more, or 1000 ppb or more. When the content of cis-3-hexen-1-ol in the alcoholic beverage is more than 90,000 ppb, the sensation of irritation due to cis-3-hexen-1-ol increases, and a sensation of irritation different from the sensation of irritation of alcohol can be sensed.

As described above, the alcoholic beverage of the present invention includes low-concentration alcoholic beverages and high-concentration alcoholic beverages. The upper limit value of the content of cis-3-hexen-1-ol in the low-concentration alcoholic beverage of the present invention is 90,000 ppb or less, preferably 70,000 ppb or less, 50,000 ppb or less, 30,000 ppb or less, 10,000 ppb or less, 5,000 ppb or less, or 1,000 ppb or less. The lower limit value of the content of cis-3-hexen-1-ol in the low-concentration alcoholic beverage of the present invention is not particularly limited, and is typically 10 ppb or more, 100 ppb or more, 200 ppb or more, or 1000 ppb or more. The upper limit value of the content of cis-3-hexen-1-ol in the high-concentration alcoholic beverage of the present invention is 90,000 ppb or less, preferably 70,000 ppb or less, 50,000 ppb or less, 30,000 ppb or less, 10,000 ppb or less, 5,000 ppb or less, or 1,000 ppb or less. The lower limit value of the content of cis-3-hexen-1-ol in the high-concentration alcoholic beverage of the present invention is not particularly limited, and is typically 10 ppb or more, 100 ppb or more, 200 ppb or more, or 1000 ppb or more.

The alcoholic beverage of the present invention contains (B) α-terpineol which is one of the monoterpene alcohols. α-Terpineol is a colorless liquid at ambient temperature having an aroma for lilac. In the alcoholic beverage of the present invention, as long as the volume ratio (A/B) of (A) cis-3-hexen-1-ol to (B) α-terpineol in the beverage is 35 or more and 30,000 or less, the content of α-terpineol is not particularly limited, and is typically, the upper limit value of the content of α-terpineol is 100 ppb or less or 10 ppb or less, and the lower limit value thereof is 0.1 ppb or more, 1.0 ppb or more, or 5.0 ppb or more.

As described above, the alcoholic beverage of the present invention includes low-concentration alcoholic beverages and high-concentration alcoholic beverages. In the low-concentration alcoholic beverage of the present invention, as long as the volume ratio (A/B) of (A) cis-3-hexen-1-ol to (B) α-terpineol in the beverage is 35 or more and 30,000 or less, the content of α-terpineol is not particularly limited, and is typically, the upper limit value of the content of α-terpineol is 100 ppb or less or 10 ppb or less, and the lower limit value thereof is 0.1 ppb or more, 1.0 ppb or more, or 5.0 ppb or more. Also, in the high-concentration alcoholic beverage of the present invention, as long as the volume ratio (A/B) of (A) cis-3-hexen-1-ol to (B) α-terpineol in the beverage is 35 or more and 30,000 or less, the content of α-terpineol is not particularly limited, and is typically, the upper limit value of the content of α-terpineol is 100 ppb or less or 10 ppb or less, and the lower limit value thereof is 0.1 ppb or more, 1.0 ppb or more, or 5.0 ppb or more.

In the alcoholic beverage of the present invention, the volume ratio (A/B) of (A) cis-3-hexen-1-ol to (B) α-terpineol is 35 or more and 30,000 or less. By adjusting the volume ratio (A/B) of (A) cis-3-hexen-1-ol to (B) α-terpineol in the alcoholic beverage to 35 or more and 30,000 or less, the sensation of irritation of alcohol can be reduced. In the alcoholic beverage of the present invention, the volume ratio (A/B) of (A) cis-3-hexen-1-ol to (B) α-terpineol is preferably 35 or more, 40 or more, 50 or more, or 100 or more. In the alcoholic beverage of the present invention, the volume ratio (A/B) of (A) cis-3-hexen-1-ol to (B) α-terpineol is preferably 30,000 or less, 15,000 or less, 10,000 or less, 5,000 or less, 2,500 or less, 2,000 or less, 1,500 or less, 1,000 or less, or 500 or less. When the A/B ratio in the alcoholic beverage is less than 35 or more than 30,000, the sensation of irritation of alcohol is not alleviated.

In an aspect, the alcoholic beverage in the present invention is a tea-based alcoholic beverage, and typically refers to an alcoholic beverage containing an extract obtained by processing and extracting a plant of the family Theaceae by a conventionally known method. In one aspect, cis-3-hexen-1-ol and α-terpineol contained in the alcoholic beverage of the present invention are derived from a plant of the family Theaceae.

In one aspect, the alcoholic beverage in the present invention refers to an alcoholic beverage containing an extract obtained by processing and extracting leaves of tea plant (Camellia sinensis) that is an evergreen tree belonging to the genus Camellia of the family Theaceae (also referred to as "tea leaves" in the present specification) by a conventionally known method. In one aspect, cis-3-hexen-1-ol and α-terpineol contained in the alcoholic beverage of the present invention are derived from tea plant.

As for the tea, the type of the tea obtained is classified by the method of processing tea leaves, and particularly by the difference in the degree of fermentation, and the quality of the tea extraction liquid is also different from each other. For example, green tea is a non-fermented tea in which the enzyme activity is lost by subjecting picked tea leaves to heat treatment, thereby preventing the oxidation of components and maintaining green color. Oolong tea is obtained by lightly stimulating picked tea leaves while withering the tea leaves to oxidize a part of tea leaf components, and then "roasting (kamairi)" the tea leaves. Oolong tea has intermediate properties between green tea and black tea and is referred to as the semi-fermented tea. Black tea is a fully fermented tea obtained by withering the picked tea leaves and twisting them well, thereby progressing the oxidation of tea leaf components by the oxidase in the tea leaves. In addition to these, there is a post-fermented tea obtained by accumulating tea leaves for a long period of time to cause the tea leaves to receive a microbial action and cause a sufficient component change. Thus, in one aspect, cis-3-hexen-1-ol and α-terpineol contained in the alcoholic beverage of the present invention are derived from green tea, oolong tea, black tea, or post-fermented tea.

As described above, in one aspect, the alcoholic beverage of the present invention is a beverage having a refreshing flavor of tea. The method of imparting the refreshing flavor of tea is not particularly limited, and for example, the refreshing flavor of tea can be imparted by blending a tea extract, or adding a component contributing to tea flavor. When a tea extract is used, the type and method of processing the tea leaves serving as the raw material are not particularly limited, and for example, an aqueous extraction liquid containing a watersoluble solid content that is obtained by extracting tea with water (hot water) can be used. In an adding aspect, the tea extraction liquid may be added to the alcoholic beverage as it is, or one obtained by concentrating, drying, and pulverizing the tea extraction liquid may be added.

In the alcoholic beverage of the present invention, an additive such as a saccharide, an acid, a fragrance, a vitamin, a pigment, an antioxidant, an acidulant, an emulsifying agent, a preservative, a seasoning, an extract, a pH regulator, or a quality stabilizer may be blended, as long as the effect of the present invention is not impaired.

The alcoholic beverage of the present invention is typically a beverage free from carbon dioxide, but can be made into a carbonated beverage by adding carbon dioxide as necessary. Carbon dioxide may be generated by fermentation or injected artificially.

Further, the alcoholic beverage of the present invention may be filled in a container. The form of the container is not limited in any way, and the alcoholic beverage of the present invention can be provided in an usual form such as a formed container using plastic as a main component, a metal can, a laminated paper container in which paper is laminated with a metal foil or a plastic film, or a glass bottle.

### 2. Method of producing alcoholic beverage

In one aspect, the present invention is a method of producing an alcoholic beverage including (i) a step of adjusting the volume ratio (A/B) of (A) cis-3-hexen-1-ol to (B) α-terpineol to 35 or more and 30,000 or less, (ii) a step of adjusting the content of cis-3-hexen-1-ol to 90,000 ppb or less and (iii) a step of adjusting the alcohol content of a beverage to less than 80 v/v%. The range of the content of (A) cis-3-hexen-1-ol and (B) α-terpineol, the range of the volume ratio (A/B), the range of the alcohol content, and the like are as described in the above-described item of "1. Alcoholic beverage".

### EXAMPLES

The present invention will be described in more detail with reference to the following Examples, but the present invention is not limited to the specific aspects described in the following examples. In the present specification, unless stated otherwise, the numerical value range includes the endpoints.

### 1. Method of preparing sample beverage

A green tea concentrated extract was added to a material alcohol (manufactured by Suntory Spirits Ltd.), and commercially available cis-3-hexen-1-ol (manufactured by Tokyo Kasei Kogyo Co., Ltd.) and α-terpineol (manufactured by NACALAI TESQUE, INC.) were added so that the above two components in the beverage were various contents, whereby sample beverages 3 to 8 were prepared. Moreover, commercially available cis-3-hexen-1-ol (manufactured by Tokyo Kasei Kogyo Co., Ltd.) and α-terpineol (manufactured by NACALAI TESQUE, INC.) were added to a material alcohol (manufactured by Suntory Spirits Ltd.) so as to be various contents and ratios, whereby sample beverages 9 to 16 were prepared. The content concentrations of cis-3-hexen-1-ol and α-terpineol in the sample beverages and commercial products (commercially available alcoholic beverages) were measured by the following method using a gas chromatography mass spectrometer. The results are shown in Table 1.

### <Quantification of cis-3-hexen-1-ol and α-terpineol>

(Pretreatment)
   Dynamic Head Space Method
   Device
   HS: MPS manufactured by Gestel
   Tube: Tenax TA
(GC analysis)
   Device
   GC: GC7890B manufactured by Agilent Technologies
   MS: 5977A manufactured by Agilent Technologies
   Column: HP-INNOWAX ϕ0.25 mm × 60 m, film thicknesses: 0.25 µm
   Carrier gas: helium 1.5 mL/min
   Temperature conditions: 40°C (4 min hold) -> heating rate: 5°C/min -> 260°C
   Ion source temperature: 260°C
   Injection method: splitless
   Mass number used in calibration curve: m/z 82 (cis-3-hexen-1-ol), m/z 93 (α-terpineol)

### 2. Sensory evaluation

The prepared sample beverages and commercial products were evaluated by 8 evaluators from the viewpoint of "the sensation of irritation of alcohol" on a five-grade scale (Scores 1 to 5), and the average value thereof was determined. The evaluation criteria of each scale are as follows. The results are shown in Table 1. Since the sensation of irritation of alcohol was slightly sensed in the beverage having an average value of 2.5 or more, the beverage having an average value of 2.4 or less was evaluated as the beverage having a reduced sensation of irritation of alcohol.

### <Evaluation score criteria>

Score 5: significantly strong sensation of irritation of alcohol
Score 4: strong sensation of irritation of alcohol
Score 3: slightly strong sensation of irritation of alcohol
Score 2: almost no sensation of irritation of alcohol
Score 1: no sensation of irritation of alcohol

**[Table 1]**

| | Alcohol content (v/v%) | (A) cis-3-Hexen-1-ol (ppb) | (B) α-Terpineol (ppb) | (A)/(B) | Sensory evaluation results of Sensation of irritation of alcoho |
|---|---|---|---|---|---|
| Sample 3 | 4 | 134.6 | 1.32 | 102 | 1.5 |
| Sample 4 | 4 | 134.6 | 4.5 | 30 | 2.5 |
| Sample 5 | 4 | 134.6 | 3.4 | 40 | 2.3 |
| Sample 6 | 4 | 10000 | 0.7 | 14286 | 2.3 |
| Sample 7 | 4 | 10000 | 2 | 5000 | 1.8 |
| Sample 8 | 4 | 10000 | 0.3 | 33333 | 2.5 |
| Sample 9 | 4 | 134.6 | 0 | - | 3 |
| Sample 10 | 4 | 1000 | 0.1 | 10000 | 2 |
| Sample 11 | 4 | 10 | 0.1 | 100 | 1.9 |
| Sample 12 | 4 | 50000 | 10 | 5000 | 2.3 |
| Sample 13 | 4 | 100000 | 10 | 10000 | 3 |
| Sample 14 | 4 | 1000 | 100 | 10 | 3 |
| Sample 15 | 4 | 5000 | 100 | 50 | 2.3 |
| Sample 16 | 4 | 5 | 0.1 | 50 | 2.6 |
| Commercial product 1 | 4 | 193 | 5.8 | 33 | 3 |
| Commercial product 2 | 5 | 0 | 0.0 | - | 3 |
| Commercial product 3 | 6 | 0 | 3.7 | 0 | 4 |

The results of Table 1 showed that the sensation of irritation of alcohol is reduced in Samples 3, 5 to 7, 10 to 12, and 15 in which the ratio (A/B) of (A) cis-3-hexen-1-ol to (B) α-terpineol is within the range of the present application as compared with other samples. On the other hand, it was also shown that the sensation of irritation of alcohol is strongly sensed in Samples 4, 8 to 9, 13, 14, and 16 and commercial products 1 to 3 in which the ratio (A/B) is out of the range of the present application. Thus, it was demonstrated that the sensation of irritation of alcohol is reduced in the beverages in which the result of the sensory evaluation is 2.4 or less.

## Claims

1. An alcoholic beverage, wherein a volume ratio (A/B) of (A) cis-3-hexen-1-ol to (B) α-terpineol is 35 or more and 30,000 or less, and wherein a content of cis-3-hexen-1-ol is 90,000 ppb or less.

2. The alcoholic beverage according to claim 1, wherein the content of cis-3-hexen-1-ol is 10 ppb or more and 50,000 ppb or less.

3. The alcoholic beverage according to claim 1 or 2, wherein a content of α-terpineol is 0.1 ppb or more and 100 ppb or less.

4. The alcoholic beverage according to any one of claims 1 to 3 comprising cis-3-hexen-1-ol and α-terpineol derived from a plant of the family Theaceae.

5. The alcoholic beverage according to claim 4, wherein the plant of the family Theaceae is tea plant (Camellia sinensis).

6. The alcoholic beverage according to any one of claims 1 to 3 comprising cis-3-hexen-1-ol and α-terpineol derived from green tea.

7. The alcoholic beverage according to any one of claims 1 to 6, wherein
an alcohol content is 10 v/v% or more;
the content of cis-3-hexen-1-ol is 10 ppb or more and 50,000 ppb or less; and
the content of α-terpineol is 0.1 ppb or more and 100 ppb or less.

8. The alcoholic beverage according to any one of claims 1 to 6, wherein
an alcohol content is 1.0 v/v% or more and less than 10 v/v%;
the content of cis-3-hexen-1-ol is 10 ppb or more and 50,000 ppb or less; and the content of α-terpineol is 0.1 ppb or more and 100 ppb or less.

9. The alcoholic beverage according to any one of claims 1 to 8, wherein the alcoholic beverage does not comprise carbon dioxide.

10. A method of producing an alcoholic beverage, comprising:
(i) a step of adjusting a volume ratio (A/B) of (A) cis-3-hexen-1-ol to (B) α-terpineol to 35 or more and 30,000 or less;
(ii) a step of adjusting a content of cis-3-hexen-1-ol to 90,000 ppb or less; and
(iii) a step of adjusting an alcohol content of the beverage to less than 80 v/v%.
